# EUROPÄISCHE PATENTSCHRIFT

(11) **EP 2 857 174 B1**
(45) Veröffentlichungstag und Bekanntmachung des Hinweises auf die Patenterteilung: **11.08.2021**
(21) Anmeldenummer: 14187790.2
(22) Anmeldetag: 06.10.2014
(51) Int. Cl.: B29C 49/42, H01L 41/08, B29C 49/60, F16K 31/124, F16K 31/00, B29C 49/58, B29C 49/78, B29C 49/12

(54) **Ventileinrichtung zum gesteuerten Einleiten eines Blasmediums und Verfahren**
Valve device for the controlled introduction of a blowing medium and process
Dispositif d'aération pour l'introduction guidée d'un fluide de soufflage et procédé

(30) Priorität: 04.10.2013 DE 102013111025
(43) Veröffentlichungstag der Anmeldung: 08.04.2015
(73) Patentinhaber: Krones AG, 93073 Neutraubling (DE)
(72) Erfinder: Finger, Dieter, 93073 Neutraubling (DE); Handschuh, Eduard, 93073 Neutraubling (DE); Geltinger, Florian, 93073 Neutraubling (DE)
(74) Vertreter: Bittner, Bernhard

(56) Entgegenhaltungen:
- EP-A1- 2 669 070
- EP-B1- 1 271 029
- DE-A1- 10 023 981
- DE-A1-102005 032 841
- None

## Beschreibung

Die vorliegende Erfindung betrifft eine Ventileinrichtung zum gesteuerten Einleiten eines Blasmediums in Kunststoffvorformlinge, umfassend zumindest einen steuerbaren Ventilkörper, zumindest eine Betätigungseinrichtung, sowie eine Steuerungseinrichtung zum Ansteuern der Betätigungseinrichtung, wobei die Betätigungseinrichtung zumindest mittelbar in Wirkverbindung mit dem Ventilkörper steht, gemäß dem Oberbegriff des Patentanspruchs 1.

Dabei sei angemerkt, dass der Begriff "mittelbar" heißt, dass entweder die Betätigungseinrichtung unmittelbar, das heißt ohne zusätzliche Bauteile zwischen dem Ventilkörper und der Betätigungseinrichtung in den Ventilkörper eingreift und diesen beispielsweise verschiebt oder zwischen der Betätigungseinrichtung und dem Ventilkörper weitere, beispielsweise eine Bewegung der Betätigungseinrichtung übersetzende Bewegungselemente, angeordnet sind. Sind daher zwischen den Betätigungseinrichtungen und dem Ventilkörper weitere separate von der Betätigungseinrichtung zu trennende Elemente angeordnet, greift die Betätigungseinrichtung lediglich mittelbar in den Ventilkörper ein.

Aus dem Stand der Technik ist eine Vielzahl von verschiedenen Ventileinrichtungen zur gesteuerten Einleitung eines Blasmediums in Kunststoffvorformlinge bekannt.

Beispielsweise ist aus der Druckschrift EP 1 271 029 B1 eine Vorrichtung zur pneumatischen Steuerung eines Blasdrucks zur Blasformung von Behältern bekannt. Hierbei kommt ein Kunststoff- oder Metallkolben zum Einsatz, wobei der Kolben pneumatisch, beispielsweise mittels eines Pilotventils, angesteuert und bewegt wird. Dazu kann das Pilotventil durch ein elektrisches Signal angesteuert werden. Zwar sind in dieser Druckschrift besonders hohe Übersetzungsverhältnisse, das heißt ein besonders hoher Druck der Prozessluft (bis zu 40 bar) mittels einer hohen Steuerluft (bis zu 12 bar) möglich, jedoch weist die in der Druckschrift D1 gezeigte Ventileinrichtung sehr hohe Ventilschaltzeiten auf. Derartige Ventilschaltzeiten können bis zu 2 Millisekunden betragen, sodass insbesondere auch in obiger Druckschrift versucht wird, die Ventilschaltzeiten durch individuelle Einleitung der Steuerluft möglichst zu reduzieren. Insbesondere weist die in der Druckschrift EP 1 271 029 B1 gezeigte Ventileinrichtung daher nicht nur eine besonders lange Ventilschaltzeit auf, sondern ebenso einen hohen Druckluftverbrauch. Darüber hinaus ist eine variable Hublänge der Ventileinrichtung beispielsweise nur durch zusätzliche mechanische Anschläge realisierbar.

Weiterhin ist aus der EP 2 669 070 A1 eine Hohlkörperherstellungsmaschine bekannt, welche unter anderem eine Form umfasst, in welcher die Hohlkörper durch Beaufschlagung mit einem Medium hergestellt werden, und eine Ventileinheit, über welche das Medium in die Form einleitbar bzw. aus der Form ausleitbar ist.

Die EP 1 271 029 B1 beschreibt weiter eine Vorrichtung, welche zur pneumatischen Steuerung dient. Die Vorrichtung weist dabei einen in einem Zylinder geführten Steuerkolben auf, welcher in Richtung einer Kolbenlängsachse verschiebbar gelagert wird und durch den Zylinder hindurch verläuft ein vom Steuerdruck verschließbarer Hauptströmungsweg.

Aus der DE 10 2005 032 841 A1 ist ein Verfahren für den Betrieb eines Einspritzventils bekannt, wobei das Einspritzventil einen piezoelektrischen Aktor umfasst, der über ein Koppelelement mit einer Ventilnadel verbunden ist, wobei an den piezoelektrischen Aktor eine elektrische Spannung angelegt wird, die zu einer Längenausdehnung bzw. Verkürzung des piezoelektrischen Aktors führt.

In der DE 100 23 981 A1 wird ein piezoelektrisch betätigtes Sitzventil offenbart, welches im Allgemeinen einen Ventilkörper mit mehreren Durchlässen aufweist, die Strömungsmittelflusspfade durch den Ventilkörper vorsehen. Der Fluss durch die Flusspfade wird durch die Position eines Sitzventils gesteuert, welches verschiebbar in strömungsmitteldichter Weise in einem Innenraum zwischen dem Ventilkörper aufgenommen ist.

Es ist daher eine Aufgabe der vorliegenden Erfindung, eine Ventileinrichtung anzugeben, welche die oben genannten Nachteile beseitigt und es daher ermöglicht, eine Ventileinrichtung anzugeben, welche besonders geringe Ventilschaltzeiten aufweist und gleichzeitig für ganz besonders hohe Drücke und/oder Druckverhältnisse ausgestaltet und dabei ebenso kostengünstig in der Herstellung ist.

Diese Aufgabe wird durch den Gegenstand des Patentanspruchs 1 gelöst. Vorteilhafte Ausgestaltungen sind in den abhängigen Ansprüchen beschrieben.

Um nun eine Ventileinrichtung zum gesteuerten Einleiten eines Blasmediums in Kunststoffvorformlinge anzugeben, welches besonders geringe Ventilschaltzeiten aufweist, kostengünstig in seiner Herstellung und darüber hinaus für besonders große Drücke und/oder Druckverhältnisse ausgestaltet ist, macht die vorliegende Erfindung unter anderem von der Idee Gebrauch, dass die Betätigungseinrichtung zumindest einen Piezoaktor umfasst, wobei über ein Betätigen der Betätigungseinrichtung und einem damit einhergehenden Ansteuern des Piezoaktors durch die Steuerungseinrichtung in Abhängigkeit des in den Piezoaktor eingeprägten Stroms und/oder der an diesen angelegten Spannung (von bevorzugt wenigstens 12 V und höchstens 200 V) der Ventilkörper von einer Offen-Stellung in eine Zu-Stellung und umgekehrt bewegbar ist, und in der Zu-Stellung ein Hauptströmungsweg, zur Einleitung des Blasmediums in die Kunststoffvorformlinge, verschlossen ist. Insbesondere kann die Betätigungseinrichtung in Form eines 2/2 oder eines 3/2-WegeVentils, beispielsweise eines Pilotventils, ausgebildet sein.

Grundsätzlich handelt es sich bei einem Piezoelement um ein Bauteil, das den Piezoeffekt ausnutzt, um entweder durch Anlegen einer elektrischen Spannung eine mechanische Bewegung auszuführen (Piezoaktor, verwendet im sogenannten inversen Piezoeffekt) oder bei Einwirkung einer mechanischen Kraft eine elektrische Spannung zu erzeugen.

Piezoelemente können bestimmte Kristalle (Piezokristalle oder piezoelektrische Keramiken), also beispielsweise polykristalline Materialen sein. Insbesondere kommen für eine Verwendung eines Piezoelements, also einem Piezoaktor, Keramiken infrage, da diese auch bei kleineren Spannungen eine größere Längenänderung als Piezokristalle ergeben.

Beispielsweise werden auf dem piezoelektrischen Material, das heißt dem piezoelektrischen Piezoaktor, Elektroden aufgebracht, sodass durch die angelegte Spannung ein elektrisches Feld entsteht bzw. das durch eine mechanische Kraft hervorgerufene elektrische Feld eine Spannung an den Elektronen bewirkt.

Im einfachsten Fall ist ein Piezoelement in Form eines Plättchens mit Elektroden an den Endflächen ausgebildet, das sich in Dickenrichtung ausdehnt und in Querrichtung zusammenzieht, wenn eine Spannung angelegt wird. Die Verformung bleibt vorzugsweise so lange bestehen, wie die Spannung angelegt bleibt. Treten keine wechselnden äußeren Kräfte auf, so wird keine Energie benötigt, die Verformung aufrecht zu erhalten. Wird die Spannung umgepolt, ändert sich die Richtung der Verformung, wobei in diesem Fall also Kontraktionen in Dickenrichtung und Ausdehnungen in Querrichtung erfolgen.

Durch die Verwendung des Piezoelements, als die hier beschriebenen Piezoaktoren, sind vorzugsweise große Bewegungsamplituden bei kleineren Spannungen erwünscht. Da die relative Längsausdehnung proportional zur elektrischen Feldstärke ist, kann das durch einen kleinen Abstand der Elektroden erreicht werden. Insofern ist durch obige Erfindung beansprucht und beschrieben, dass durch ein Einprägen von Strom und/oder Spannung in den Piezoaktor dieser verformt wird und über die Verformung des Piezoaktors und damit auch die zumindest mittelbare Wirkverbindung des Piezoaktors mit dem Ventilkörper der Ventilkörper mechanisch bewegt wird, sodass der Ventilkörper entweder von einer Zu-Stellung in eine Offen-Stellung oder umgekehrt, je nach Polung der Spannung an den Piezoaktor, durch diesen selbst der Ventilkörper verschoben werden kann.

Insofern ist mittels der hier beschriebenen Ventileinrichtung umfassend den zumindest einen Piezoaktor in besonders einfacher Weise das Prinzip von "Piezoelementen" erstmals in einer Ventileinrichtung zum gesteuerten Einleiten eines Blasmediums in Kunststoffvorformlinge integriert, sodass die vorliegende Erfindung von der überraschenden Kenntnis Gebrauch macht, dass mittels des hier beschriebenen Piezoaktors Ventileinrichtungen anbietbar sind, welche nicht nur hohe Drücke und/oder Druckverhältnisse standhalten, sondern auch ganz besonders geringe Schaltzeiten mittels individueller Ansteuerung der Steuerungseinrichtung realisierbar sind. Daher bietet die hier beschriebene Ventileinrichtung und insbesondere die hier beschriebene Betätigungseinrichtung umfassend den zumindest einen Piezoaktor in besonders einfacher und vorteilhafter Weise die Möglichkeit, langlebige, kostengünstige und besonders sicher zu fahrende Ventileinrichtungen anzubieten ohne beispielsweise auf teurere und fehleranfällige, beispielsweise pneumatisch betriebene, Ventileinrichtungen zurückgreifen zu müssen. Zudem kann die hier beschriebene Ventileinrichtung im drehenden Karussell besonders betriebsstabil betrieben werden.

Dabei kann die Ventileinrichtung zumindest einen Führungsbolzen aufweisen, entlang dessen der Ventilkörper geführt wird. Alternativ dazu ist denkbar, dass auf einen Führungsbolzen verzichtet ist. Dies kann heißen, dass das Ventil druckausgeglichen betrieben wird oder betreibbar ist.

Gemäß zumindest einer Ausführungsform umfasst die Ventileinrichtung zum gesteuerten Einleiten eines Blasmediums in Kunststoffvorformlinge zumindest einen steuerbaren Ventilkörper, zumindest eine Betätigungseinrichtung, sowie eine Steuerungseinrichtung zum Ansteuern der Betätigungseinrichtung, wobei die Betätigungseinrichtung zumindest mittelbar in Wirkverbindung mit dem Ventilkörper steht. Dabei umfasst die Betätigungseinrichtung zumindest einen Piezoaktor, wobei über ein Betätigen der Betätigungseinrichtung und einem damit einhergehenden Ansteuern des Piezoaktors durch die Steuerungseinrichtung in Abhängigkeit des in den Piezoaktor eingeprägten Stroms und/oder der an diesem angelegten Spannung der Ventilkörper von einer Offen-Stellung in eine Zu-Stellung und umgekehrt bewegbar ist, und in der Zu-Stellung ein Hauptströmungsweg zur Einleitung des Blasmediums in die Kunststoffvorformlinge verschlossen ist.

Gemäß zumindest einer Ausführungsform umfasst die Betätigungseinrichtung zumindest einen Steuerluftanschluss, durch den hindurch Steuerluft, zum mechanischen Bewegen des Ventilkörpers und/oder eines Dichtkolbens der Betätigungseinrichtung, entlang eines Steuerluftkanals führbar ist, wobei in der Zu-Stellung ein Strömungsweg durch den Dichtkolben verschlossen oder geöffnet ist.

Mit anderen Worten kann über den hier beschriebenen Steuerluftanschluss Steuerluft als ein gedachtes "Hebelelement" zum erleichterten Bewegen des Ventilkörpers benutzt werden, sodass in einer derartigen Ausführungsform die Betätigungseinrichtung umfassend das hier beschriebene Piezoelement beispielsweise in mittelbarem Kontakt mit dem Ventilkörper selbst ist. Insofern wird der Ventilkörper über einen von der Steuerluft auf eine Ventilfläche erzeugten Steuerdruck an einer Steuerseite des Ventilkörpers bewegt, sodass der hier beschriebene Dichtkolben der Betätigungseinrichtung lediglich zum Steuern und Regeln der Steuerluft und nicht unmittelbar zum Regeln und/oder mechanischen Betätigen des Ventilkörpers dient. Insofern sind der Dichtkolben der Betätigungseinrichtung und der Ventilkörper in einer derartigen Ausführungsform nicht in direktem Kontakt miteinander. Dies bietet unter anderem auch den Vorteil, dass bereits geringe Ausschläge und/oder Verformungen des Piezoelements innerhalb der Betätigungseinrichtung "hebelwirkungsartig" große Veränderungen in einem Steuerluftdurchfluss und/oder Steuerluftdruck bewirken können, der sich auf den Ventilkörper beispielsweise unmittelbar überträgt. Insofern können besonders kleine Piezoaktoren verwendet werden, die nur geringe Verformungsänderungen aufweisen, da diese lediglich die Steuerluft und den Steuerluftdurchfluss durch die Betätigungseinrichtung zu regeln haben. Grundsätzlich kann nämlich eine Steuerung des Druckkolbens und/oder des Ventilkörpers mittels einer Druck-und/oder Kraftkomponente erfolgen.

Zu Kalibrierungszwecken kann eine Referenzfahrt des Druckkolbens und/oder des Ventilkörpers durchgeführt werden um einen Endanschlag des Druckkolbens und/oder des Ventilkörpers zu kalibrieren.

Zudem ist denkbar, dass mittels eines Bildschirms und einer damit verbundenen Recheneinheit ein Kraft/Weg-Verlauf zeitabhängig aufgezeichnet werden kann.

Gemäß zumindest einer Ausführungsform steht der Ventilkörper direkt in Eingriff mit der Betätigungseinrichtung, insbesondere mit dem Piezoaktor. In einer derartigen Ausgestaltung ist daher der Piezoaktor beispielsweise in direktem Kontakt mit dem Ventilkörper, sodass vorstellbar ist, dass über eine äußere Verformung des Piezoaktors unmittelbar eine mechanische Bewegung des Ventilkörpers bewirkt werden kann ohne, dass zwischen dem Piezoaktor und dem Ventilkörper beispielsweise die obig beschriebene Steuerluft benutzt werden müsste.

Denkbar ist jedoch auch eine Kombination aus der hier beschriebenen Steuerluftsteuerung und einer direkten Anordnung des Piezoaktors an dem Ventilkörper. Beispielsweise ist es denkbar, dass verschiedene Piezoaktoren über die Steuerungseinrichtung vorgebbar angesteuert werden können und je nach den Bedürfnissen des Benutzers entweder zwischen einem Steuerluftbetrieb oder einem direkten Eingriff des Piezoaktors an den Ventilkörper gewählt werden kann oder aber auch eine beliebige Kombination der verschiedenen Betriebsarten vorgenommen und angesteuert werden kann.

Gemäß zumindest einer Ausführungsform sind eine Hubbewegung eines Dichtkolbens der Betätigungseinrichtung und/oder eine Verformung des Piezoaktors zumindest teilweise reversibel (im Fachjargon auch regenerativ). "Reversibel" heißt in diesem Zusammenhang, dass eine Bewegung und/oder Verformung des Piezoaktors oder des Dichtkolbens ohne beispielsweise mechanische Beschädigungen wiederholbar ist. Insofern ist der hier beschriebene Dichtkolben und/oder der hier beschriebene Piezoaktor vollständig ohne mechanische strukturelle Schädigungen in den Ausgangszustand wieder vorgebbar versetzbar, sodass die hier beschriebene Betätigungseinrichtung, insbesondere die hier beschriebene Ventileinrichtung, für eine praktisch unbegrenzte Zahl von Betriebsmodi, das heißt von Offen-Stellungen und Zu-Stellungen, benutzt werden kann.

Gemäß zumindest einer Ausführungsform ist über eine Veränderung einer äußeren Form des Piezoaktors eine Verschiebung eines Dichtkolbens der Betätigungseinrichtung bewirkbar.

"Äußere Form" bezeichnet daher die für einen Benutzer von außen einsehbare äußere Ausgestaltung und Beschaffenheit des Piezoaktors. Wird die äußere Form des Piezoaktors nun verändert, bewirkt dies einen beispielsweise unmittelbaren Eingriff in die Bewegung des Dichtkolbens. Es ist daher denkbar, dass der Piezoaktor direkt mit dem Dichtkolben beispielsweise mechanisch fest verbunden ist. Mit anderen Worten kann in besonders vorteilhafter Art und Weise besonders einfach und ohne die Zwischenschaltung von zusätzlichen mechanischen und/oder elektrischen Bauelementen über die Ansteuerung des Piezoaktors beispielsweise mittels Spannung und einer damit einhergehenden Veränderung der äußeren Form des Piezoaktors eine Verschiebung eines Dichtkolbens der Betätigungseinrichtung vorzugsweise reversibel erzeugt werden.

Gemäß zumindest einer Ausführungsform ist über eine Veränderung einer Dickenausdehnung in Hubrichtung des Ventilkörpers eine Verschiebung eines Dichtkolbens der Betätigungseinrichtung bewirkbar. Denkbar ist in diesem Zusammenhang, dass beidseits auf Deckflächen des Piezoaktors zumindest eine Elektrode in der Dickenrichtung des Piezoaktors angeordnet ist und der gesamte Piezoaktor in Hubrichtung des Ventilkolbens und/oder des Dichtkolbens hinter dem Dichtkolben des Betätigungselements angeordnet ist und bei Anliegen einer Spannung beispielsweise eine Dicke des Piezoaktors verringert wird, wodurch der Dichtkolben der Betätigungseinrichtung in Richtung des Piezoaktors gezogen wird und somit beispielsweise der Dichtkolben einen Steuerluftanschluss öffnet, wodurch der gesamte Ventilkörper beispielsweise in Richtung weg des Piezoelements in eine Zu-Stellung geschoben oder gezogen werden kann.

Gemäß zumindest einer Ausführungsform ist der Piezoaktor in Form eines Piezo-Stacks, umfassend zumindest zwei in Reihe hintereinander positionierte und/oder in Reihe zueinander geschaltete Piezo-Teilaktoren ausgeführt. Insofern kann eine Dickenänderung eines Piezo-Teilaktors durch eine hier beschriebene Kaskadierung von mehreren hintereinander geschalteten Piezoelementen jeweils aufaddiert werden, sodass die Summe einer Dickenänderung der Piezo-Teilaktoren einer Gesamtdickenänderung des gesamten Piezoaktors entspricht. Insbesondere ergibt sich somit eine mechanische Reihenanordnung mit Ansteuerung durch eine beispielsweise elektrische Parallelschaltung. Dazu ist denkbar, dass man auf eine Elektrode (beispielsweise einem Plus-Anschluss) einen ersten Piezo-Teilaktor positioniert, danach wieder eine Elektrode (beispielsweise einen Minus-Anschluss) und im Folgenden weitere Piezo-Teilaktoren in regelmäßiger Abwechslung zu dazwischen angeordneten Elektroden, wobei eine Polarisierungsrichtung geändert wird oder geändert werden muss. Eine derartige Kaskadierung kann daher beinahe beliebig oft wiederholt werden. Dabei können die Plus- und Minus-Elektroden jeweils von außen verbunden werden.

Mit anderen Worten können an die Elektroden die Spannungen angelegt werden, sodass sich die Distanz der beiden Elektroden aufgrund der Längenänderung des Piezo-Teilaktors vergrößert oder verkleinert. Insbesondere wird vorliegend eine Spannung von wenigstens 12 Volt bis höchstens 200 Volt verwendet. Ein derartiger Spannungsbereich hat sich als besonders vorteilhaft in Bezug auf eine möglichst effektive Längenänderung erwiesen.

Gemäß zumindest einer Ausführungsform umfasst die Ventileinrichtung zumindest eine Energiespeichereinrichtung zum Speichern von elektrischer Energie, wobei eine Speicherkapazität der Energiespeichereinrichtung derart bemessen ist, dass über eine Ansteuerung und ein Betreiben des Piezoaktors der Ventilkörper und/oder ein Dichtkolben der Betätigungseinrichtung über zumindest eine vollständige Hubbewegung bewegbar ist. Eine derartige Energiespeichereinrichtung ermöglicht einen ganz besonders sicheren Betrieb der Ventileinrichtung, beispielsweise in einer Blasformmaschine. Denkbar ist nämlich, dass aufgrund von Betriebsstörungen eine kontinuierliche Stromversorgung der Betätigungseinrichtung und damit der Ventileinrichtung und/oder weiterer Bauteile der Blasformmaschine nicht gewährleistet ist. Fällt nun aufgrund unvorhergesehener Umstände eine Energieversorgung der Blasformmaschine und damit der Ventileinrichtung aus, ermöglicht es die hier beschriebene Energiespeichereinrichtung aufgrund deren Speicherkapazität trotz des Abbruchs einer externen Energieversorgung, die Ventileinrichtung beispielsweise von einer Offen-Stellung in eine Zu-Stellung zurückzufahren, sodass Blasluft nicht ungewollt und unvorhergesehen bei einem generellen Stillstand der Blasformmaschine beispielsweise unkontrolliert in die Kunststoffvorformlinge eingeblasen wird, obwohl die gesamte Blasformmaschine und die Bewegung der Kunststoffvorformlinge bereits zum Stillstand gekommen ist. Insofern ist durch die hier beschriebene Energiespeichereinrichtung in besonders vorteilhafter Art und Weise ein Sicherungsmechanismus realisiert, der vollkommen ohne externe Energieversorgung auskommt.

Gemäß zumindest einer Ausführungsform umfasst die Ventileinrichtung zumindest ein Übersetzungsgetriebe zum Übertragen und Übersetzen einer Bewegung und/oder Verformung des Piezoaktors auf eine Hubbewegung eines Dichtkolbens der Betätigungseinrichtung und/oder eines Kolbens des Ventilkörpers. Beispielsweise kann das Übersetzungsgetriebe in Form eines "Hebelübersetzungselements" ausgebildet sein, sodass bereits eine kleine Bewegung des Piezoaktors durch das Übersetzungsgetriebe in eine um vorgebbare Faktoren vergrößerte beispielsweise Linearbewegung des Dichtkolbens übersetzt und damit übertragen werden kann. Durch das hier beschriebene Übersetzungsgetriebe ist daher ermöglicht, bei Ventileinrichtungen, welche große Hubwege benötigen, trotzdem noch besonders effektiv den hier beschriebenen Piezoaktor (obwohl dieser oftmals geringe Dickenänderungen aufweist) benutzen zu können, wodurch somit durch das hier beschriebene Übersetzungsgetriebe Ventileinrichtungen realisiert sind, welche auch bei besonders großen Querschnitten Anwendung finden können. Insbesondere kann das Übersetzungsgetriebe selbsthemmend, spielfrei und/oder einstellbar betreibbar oder ausgebildet sein.

Erfindungsgemäß weist eine Dichtfläche zwischen einem Dichtkolben des Ventilkörpers und einem Gehäuse des Ventilkörpers einen unterschiedlichen Härtegrad zu einem Härtegrad des Kolbens auf.

Insbesondere ist denkbar, dass der Kolben mit einem Metall und eine Innenfläche des Gehäuses mit einem Kunststoff ausgebildet ist, oder umgekehrt. Insofern ist es vorstellbar, dass stets innerhalb des Betätigungselements ein Metall auf einen Kunststoff trifft und entlang diesem entlang reibt. Es wurde nämlich überraschenderweise erkannt, dass durch eine derartige Metall-/Kunststoffgrenzfläche zwischen dem Dichtkolben und einer Innenfläche des Gehäuses des Ventilkörpers ganz besonders geringe Reibungswiderstände mit einer minimierten Hitzeentwicklung ermöglicht sind, sodass dadurch eine ganz besonders langlebige Ventileinrichtung geschaffen ist. Übersichtweise ist damit beispielhaft folgender Grenzflächenaufbau möglich:
Kolben: Metall / Kunststoff
Führung: Kunststoff / Metall.
Es reibt daher beispielhaft stets Metall auf Kunstsoff oder umgekehrt.

In diesem Zusammenhang sei erwähnt, dass das hier beschriebene Übersetzungsgetriebe zumindest ein drehendes und/oder zumindest ein linear bewegtes Teil umfassen kann. Dazu ist denkbar, dass ein derartiges drehendes Teil aus einem Kunststoff und ein weiteres linear bewegtes Teil des Übersetzungsgetriebes aus einem Metall oder einer gerade umgekehrten Materialausgestaltung ausgebildet sein können. Auch hierbei wurde erkannt, dass ein derartiges Übersetzungsgetriebe durch eine derartige Kunststoff-/Metallgrenzfläche ganz besonders langlebig ist und sowohl geringe Reibungswiderstände und -verluste, als auch eine geringe Hitzeentwicklung aufweist. Übersichtweise ist damit beispielhaft folgender Grenzflächenaufbau des Übersetzungsgetriebes möglich:
drehendes Teil: Kunststoff / Metall
linear bewegtes Teil: Metall / Kunststoff.

Es reibt daher beispielhaft stets Metall auf Kunstsoff oder umgekehrt.

Gemäß zumindest einer Ausführungsform wird die Steuerungseinrichtung von einem elektrisch betriebenen Bus-System mit einer externen Spannung verbunden und betrieben. Bei einem hier beschriebenen elektrischen Bus-System handelt es sich um eine Sammel- und/oder Verteileinrichtung, welche beispielsweise zentral gesteuert wird, sodass die hier beschriebene Steuerungseinrichtung beispielsweise zentral über das elektrische Bus-System über eine Controllervorrichtung betrieben werden kann.

Gemäß zumindest einer Ausführungsform ist ein Volumenstrom innerhalb des Hauptströmungswegs mittels einer durch die Steuerungseinrichtung einstellbaren, variablen Hublänge des Dichtkolbens der Betätigungseinrichtung einstellbar. Vorteilhaft kann so eine große Hublänge mit einer besonders feinen Abstimmung des Volumenstroms korreliert sein.

Es wird darüber hinaus eine Blasvorrichtung zum gesteuerten Einleiten eines Blasmediums in Kunststoffvorformlinge, umfassend zumindest eine Ventileinrichtung gemäß zumindest einem einer der vorhergehenden Ausführungsformen sowie ein Verfahren zum Betrieb einer Blasvorrichtung beschrieben. Das heißt die für die hier beschriebene Ventileinrichtung aufgeführten Merkmale sind auch für die hier beschriebene Blasvorrichtung und das hier beschriebene Verfahren offenbart und umgekehrt.

Gemäß zumindest einer Ausführungsform umfasst die Blasvorrichtung zumindest eine Controllerstation, über die die Steuerungseinrichtung überwacht und/oder gesteuert wird. Insbesondere ist denkbar, dass mittels der hier beschriebenen Controllerstation eine vorgebbare Anzahl beispielsweise alle oder auch nur ein Teil der Ventileinrichtungen der Blasvorrichtung vorgebbar über die Ansteuerung der jeweiligen Steuerungseinrichtungen überwacht und/oder gesteuert werden. Mit anderen Worten ist mittels der hier beschriebenen Controllerstation eine zentrale Verarbeitungseinheit angeboten, die eine besonders kostengünstige und zeitsparende Diagnosemöglichkeit, beispielsweise von Betriebsfehlern der einzelnen Betriebseinrichtungen der Blasvorrichtung, detektieren und/oder anzeigen kann. Dabei kann die Controllerstation zentral oder dezentral an der Blasvorrichtung angeordnet sein.

Alternativ oder zusätzlich ist denkbar, dass jeder Ventileinrichtung zumindest eine separate Controllerstation zugeordnet ist. Dazu kann jede Controllerstation von der Ventileinrichtung umfasst und beispielsweise integriert sein.

Gemäß zumindest einer Ausführungsform der Blasvorrichtung ist eine Positionierung zumindest einer Reckstange in den Kunststoffvorformling und die Ansteuerung des Piezoaktors über die Steuerungseinrichtung durch die Controllerstation überwacht und/oder gesteuert und aufeinander abgestimmt. Insofern ist denkbar, dass ein Blas- oder Ausblasvorgang über die Positionierung der Reckstange in den Kunststoffvorformling und eine Ansteuerung des Piezoaktors voneinander abhängig gemacht wird. Denkbar ist nämlich, dass erst nach einer vorgebbaren Endpositionierung der Reckstange innerhalb des Kunststoffvorformlings die Ventileinrichtung von der Zu-Stellung in die Offen-Stellung umgeschaltet wird, sodass sichergestellt wird, dass mittels einer derartigen Aufeinanderabstimmung und Abhängigmachung der Positionierung der Reckstange und der Ansteuerung des Piezoaktors, nicht bereits vor der Endpositionierung der Reckstange innerhalb des Kunststoffvorformlings ungewollt Blasluft in diesen strömt.

Gemäß zumindest einer Ausführungsform ist ein Hubweg des Ventilkörpers und/oder eines Dichtkolbens bei der Betätigungseinrichtung parallel oder in einem Winkel von mehr als 0° und weniger als 180° zu einem Hubweg einer Reckstange zum Einführen in den Kunststoffvorformling. Insofern ist durch eine derartige "parallele" Ausrichtung der einzelnen Hubwege sichergestellt, dass möglichst übertragungsfrei, das heißt ohne unnötige und zusätzliche mechanische Elemente zur Übertragung, beispielsweise einer linearen Bewegung und einer zirkulären Bewegung oder beispielsweise einer linearen Bewegung in einer Richtung und einer linearen Bewegung in einer anderen Richtung, verzichtet werden kann. Alternativ ist denkbar, dass der Hubweg des Ventilkörpers und/oder eines Dichtkolbens in einem vorgebbaren Winkel von höchstens 180° zur Reckstange angeordnet ist.

Im Folgenden wird die hier beschriebene Ventileinrichtung sowie die hier beschriebene Blasvorrichtung anhand von Ausführungsbeispielen und den dazu gehörigen Figuren näher erläutert:
- Fig. 1A - 1B: Eine schematische Draufansicht eines ersten Ausführungsbeispiels einer erfindungsgemäßen Ventileinrichtung;
- Fig. 2A - 2B: eine schematische Draufansicht eines weiteren Ausführungsbeispiels einer erfindungsgemäßen Ventileinrichtung;
- Fig. 3A - 4D: eine schematische Draufansicht von Direktantrieben von Ausführungsbeispielen einer erfindungsgemäßen Ventileinrichtung; und
- Fig. 5: eine schematische Seitenansicht eines Ausführungsbeispiels eines Übersetzungsgetriebes.

In den Ausführungsbeispielen und in den Figuren sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

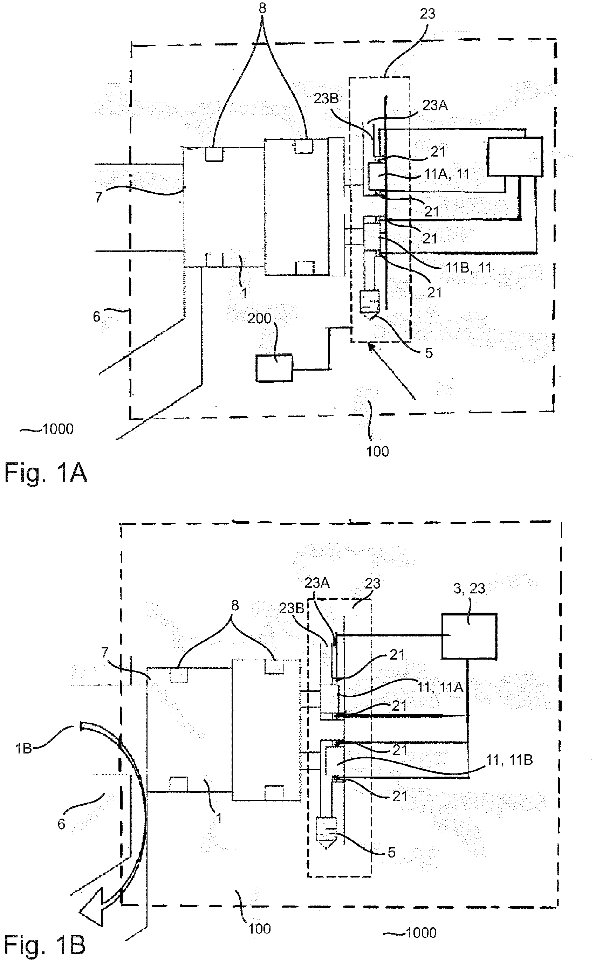

In der Fig. 1A ist anhand einer schematischen Draufansicht ein Ausführungsbeispiel einer hier beschriebenen Ventileinrichtung 100 zum gesteuerten Einleiten eines Blasmediums 1A in Kunststoffvorformlinge gezeigt. Dabei umfasst die Ventileinrichtung 100 im vorliegenden Ausführungsbeispiel einen steuerbaren Ventilkörper 1, eine Betätigungseinrichtung 23 sowie eine Steuerungseinrichtung 22 zum Ansteuern einer Betätigungseinrichtung 23, wobei die Betätigungseinrichtung 23 in mittelbarer Wirkverbindung mit dem Ventilkörper 1 steht.

Mit anderen Worten umfasst die Betätigungseinrichtung 23 einen Steuerluftanschluss 23A, durch den hindurch Steuerluft zum mechanischen Bewegen des Ventilkörpers 1 entlang eines Steuerluftkanals 23B führbar ist, wobei in der Zu-Stellung des Ventilkörpers 1 ein Strömungsweg durch den Dichtkolben 11, 11A geöffnet ist, sodass die Steuerluft über den Steuerluftkanal 23B auf eine Fläche des Ventilkörpers 1 an der Steuerseite trifft und den Ventilkörper 1 in Richtung weg der Betätigungseinrichtung 2 drängt. In dieser Stellung des Ventilkörpers kann keine Blasluft in den Kunststoffvorformling eintreten. Dabei ist gleichzeitig aus der Fig. 1A ersichtlich, dass ein weiterer Dichtkolben 11, 11B luftdicht den ihm zugeordneten Steuerluftkanal verschließt, sodass Steuerluft in einer derartigen Ausführungsform einmal eingeleitet in ein Gehäuse des Ventilkörpers nicht durch den weiteren Steuerluftkanal entweichen kann. Insofern wird ein beständiger Druck auf einen Kolben des Ventilkörpers ausgeübt, der einen Zwischenkanal zwischen einem Steuerblock 6 der Blasformmaschine und einem weiteren oder sonstigen Kanalelement einer Blasmaschine 1000 verschließt. Insofern befindet sich die in der Fig. 1A gezeigten Ventileinrichtung 100 in einem geschlossenen Zustand.

Dabei umfasst, wie in der Fig. 1A weiter dargestellt, die Betätigungseinrichtung 23 insgesamt vier Piezoaktoren 21, wobei jeweils zwei Piezoaktoren 21 einem Dichtkolben 11A, 11B zugeordnet sind und diesen bewegen können. Insofern wird über ein Betätigen der Betätigungseinrichtung 23 und einem damit einhergehenden Ansteuern der Piezoaktoren 21 durch die Steuerungseinrichtung 22 in Abhängigkeit des in die Piezoaktoren 21 eingeprägten Stroms und/oder der an diesen angelegten Spannung der Ventilkörper 1 von einer Offen-Stellung in der in der Fig. 1A gezeigten Zu-Stellung bewegt. Zudem umfasst jede Betätigungseinrichtung eine Controllerstation 200 über welche die Steuerungseinrichtung 22 überwacht und/oder gesteuert wird.

Insbesondere ist erkennbar, dass die in der Fig. 1A dem Dichtkolben 11A zugeordneten Piezoelemente 21 seitlich einer Hubrichtung des Ventilkörpers 1 unmittelbar mit dem Dichtkolben 11A an dessen Seitenflächen verbunden sind und dabei eine umgekehrte Ansteuerungspolarität aufweisen, als diejenigen Piezoaktoren 21, welche dem weiteren Dichtkolben 11B zugeordnet sind und mit diesem befestigt sind. Insofern ist sichergestellt, dass bei dem in der Fig. 1A gezeigten verschlossenen Ventilzustand der erste Dichtkolben 11A Steuerluft hindurch lässt und auf den Ventilkörper 1 treffen lässt und der zweite Dichtkolben 11B zu Abdichtungszwecken den ihm zugeordneten Steuerluftkanal vollständig verschließt. Insofern können die jeweiligen Piezoaktoren 21 der jeweiligen Dichtkolben 11A, 11B mit unterschiedlicher Spannungspolarität angesteuert sein. Mit anderen Worten erfolgt eine Steuerung der Dichtkolben kombiniert über Kraft und Weg. Insbesondere kann das Schließen des Ventilkörpers 1 kraftgesteuert erfolgen. Dabei ist denkbar, dass die Steuerungseinrichtung 22 des Ventilkörpers 1 in unmittelbarer Nähe zum Ventilkörper 1 und/oder zu den Piezoaktoren 21 angeordnet ist. Dabei ist weiter vorstellbar, dass die Ventileinrichtung 100 ein Gehäuse umfasst, welches zumindest die Piezoaktoren 21 aufnimmt. Daher können die Piezoaktoren 21 in das Gehäuse integriert angeordnet sein.

Darüber hinaus weist die Betätigungseinrichtung 2 zumindest einen Schalldämpfer 5 auf, der durch den weiteren Steuerluftkanal hindurch strömende Steuerluft und von dieser erzeugte Schallwellen dämpft.

In der Fig. 1B ist die in der Fig. 1A gezeigte Ventileinrichtung 100 in einer offenen Stellung gezeigt, sodass in den zwischen dem Steuerblock 6 und dem weiteren Bauelement einer Blasformmaschine 1000 ausgebildeten Kanal Blasluft entlang eines Hauptströmungsweges 1B (durch den geschwungenen Pfeil gezeigt) strömen kann. Dabei sei insbesondere darauf hingewiesen, dass nunmehr die beiden Dichtkolben 11A, 11B in umgekehrter Schaltrichtung angeordnet sind, sodass in der Fig. 1B der erste Dichtkolben 11A den ihm zugeordneten Steuerluftkanal 23B luftdicht verschließt und im Gegensatz zu der Fig. 1A der zweite Dichtkolben 11B den ihn zugeordneten Steuerluftkanal öffnet, sodass beispielsweise aus einer Luftkammer, welche die Steuerseite der Ventileinrichtung 100 füllt, Luft über den Schalldämpfer entweichen kann. Zur Abdichtung bei einer Bewegung des Ventilkörpers 1 sind randseitig des Ventilkörpers Dichtungen (beispielsweise ausgelegt für Drücke bis zu 40 bar) vorgesehen (siehe Figuren 1A und 1B).

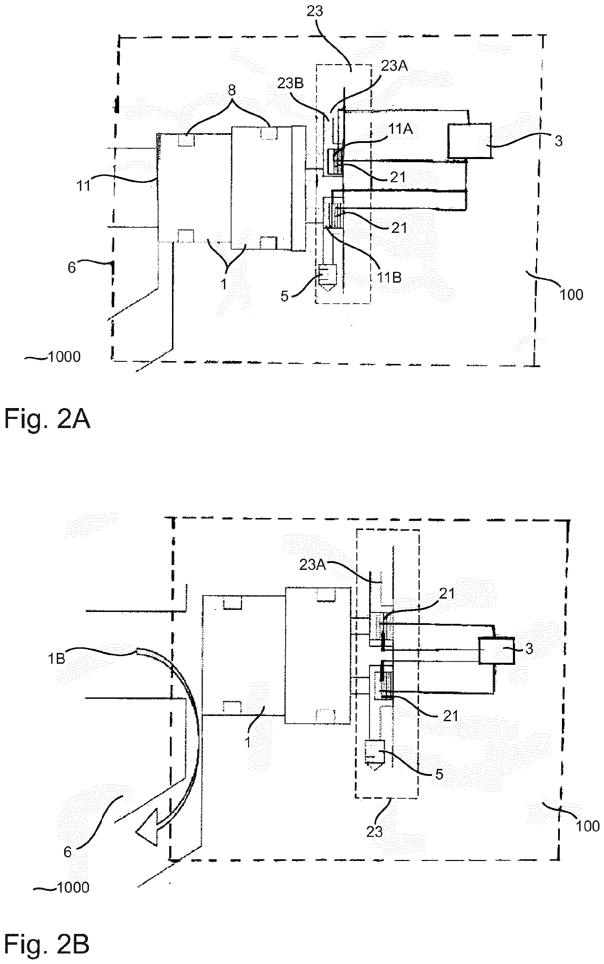

In der Fig. 2A ist in einer schematischen Seitenansicht ein weiteres Ausführungsbeispiel einer hier beschriebenen Ventileinrichtung 100 gezeigt, wobei im Unterschied zu den Ausführungsbeispielen gemäß den Figuren 1A und 1B die Piezoaktoren 21 jeweils in Form von Piezo-Stacks aufgebaut sind, welche zumindest zwei in Reihe hintereinander positionierte und in Reihe zueinander geschaltete Piezo-Teilaktoren umfassen. Insofern sind die dort gezeigten Piezoaktoren 21 in Hubrichtung des Ventilkörpers 1 hinter ihnen jeweilig zugeordnete Dichtkolben 11A und 11B angeordnet. Mit anderen Worten sind daher die jeweiligen Dichtkolben 11A und 11B zwischen dem Ventilkörper 1 und den jeweiligen Piezoaktoren 21 angeordnet. Insofern wird über eine Ansteuerung der jeweiligen Piezoaktoren 21 über die Steuerungseinrichtung 22 eine Dicken- und/oder Formänderung der Piezoaktoren 21 ausgenutzt. Eine derartige Dickenänderung wird durch die einzelnen Dickenänderungen der jeweiligen Piezo-Teilaktoren erzeugt, sodass jeweilige Einzeldickenänderungen der Piezo-Teilaktoren sich einander aufaddieren und damit eine Gesamtdickenänderung der Piezoaktoren 21 ergeben.

In der Fig. 2B ist die in Fig. 2A gezeigte Ventileinrichtung 100 in einem geöffneten Zustand gezeigt. Wiederum kann erkannt werden, dass ein Hauptströmungsweg 1B geöffnet ist und somit Blasluft zwischen dem Steuerblock 6 und einem weiteren Bauelement der Blasvorrichtung 1000 zu dem Kunststoffvorformling, beispielsweise über Reckstangen, gelangen kann.

Darüber hinaus ist sowohl dem Ausführungsbeispiel gemäß den Figuren 1A und 1B sowie dem Ausführungsbeispiel gemäß der Figuren 2A und 2B entnehmbar, dass die jeweiligen Piezoaktoren 21 über zumindest eine ihnen zugeordnete Energiespeichereinrichtung 3 zum Speichern von elektrischer Energie auch nach Ausfall, beispielsweise einer Energieversorgung der gesamten Blasformmaschine 1000, über zumindest noch eine vollständige Hublänge, beispielsweise von einer Offen-Stellung in eine Zu-Stellung, bewegt und gebracht werden kann.

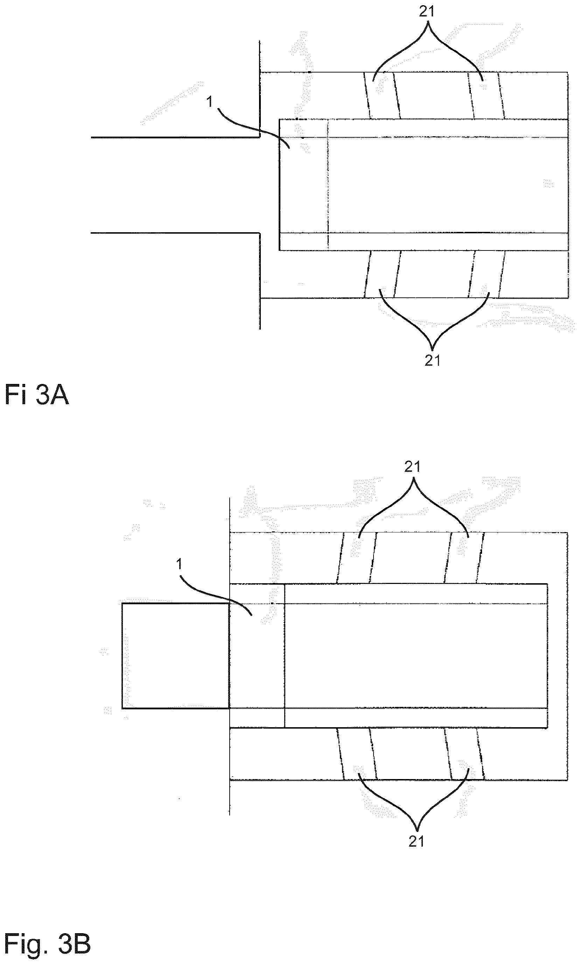

Die Fig. 3A und 3B zeigen in schematischen Seitenansichten ein weiteres Ausführungsbeispiel einer hier beschriebenen Ventileinrichtung 100, wobei im Unterschied zu den in Fig. 1A und 1B gezeigten Betätigungselement 2, der Ventilkörper 1 direkt mit dem dort dargestellten Piezoaktoren 21 verbunden ist. Insofern ist in den Fig. 3A und 3B auf eine indirekte Steuerung des Ventilkörpers 1 über die Steuerluft verzichtet, sodass eine möglichst unmittelbare Übersetzung der mechanischen Verformung der Piezoaktoren 21 auf eine Bewegung des Ventilkörpers angeboten wird, wobei in der Fig. 3A die Ventileinrichtung 100 in einer Offen-Stellung und in der Fig. 3B die Ventileinrichtung in einer Zu-Stellung betrieben ist.

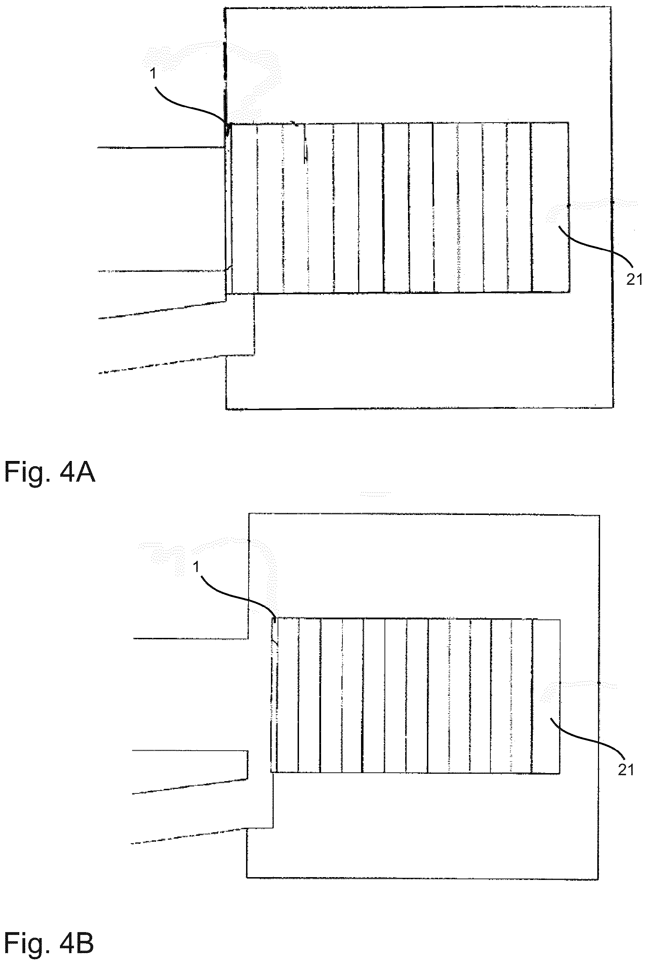

In den Fig. 4A bis 4B sind in schematischen Seitenansichten ein weiteres Ausführungsbeispiel einer hier beschriebenen Ventileinrichtung 100 gezeigt, bei dem im Unterschied zu den Fig. 3A und 3B die jeweiligen Piezoaktoren 21 in Form von Piezo-Stacks ausgebildet sind, sodass in den Fig. 4A und 4B eine Dickenänderung über die stackartige Kaskadierung von einzelnen Piezo-Teilaktoren ausgenutzt wird, um, wie in der Fig. 4A gezeigt, die Ventileinrichtung 100 direkt zu verschließen, oder wie in der Fig. 4B gezeigt, die Ventileinrichtung 100 zu öffnen.

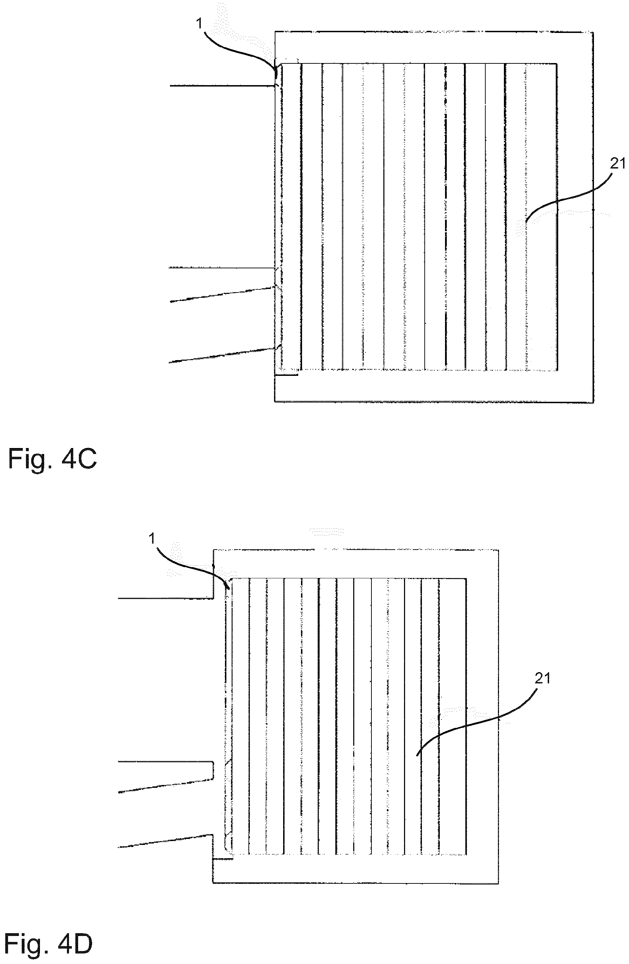

In den Fig. 4C und 4D ist in weiteren schematischen Seitenansichten ein weiteres Ausführungsbeispiel einer hier beschriebenen Ventileinrichtung 100 gezeigt, bei dem wiederum mechanisch unmittelbar durch eine Dickenänderung der dort gezeigten Piezoaktoren 21 (welche ebenso in Form einer Kaskadierung durch Piezo-Teilaktoren gebildet ist) die Ventileinrichtung 100 geschlossen oder geöffnet werden kann und der Ventilkörper 1 direkt mit den Piezoaktoren 21 verbunden ist.

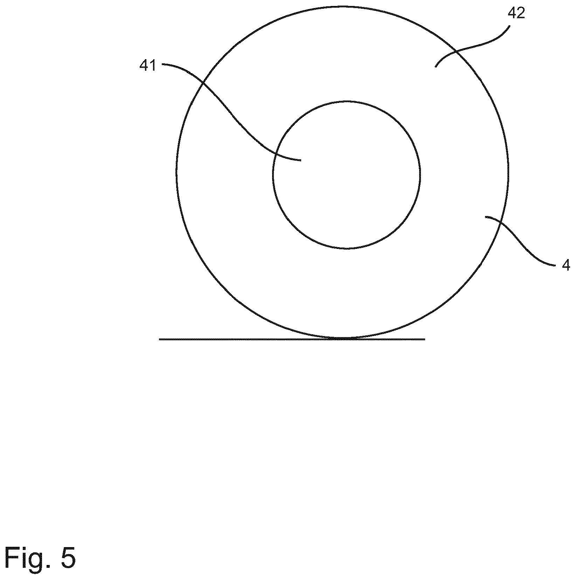

In der Fig. 5 ist in einer schematischen Seitenansicht ein hier beschriebenes Übersetzungsgetriebe 4 zum Übertragen und Übersetzen einer Bewegung und/oder einer Verformung des Piezoaktors 21 auf eine Hubbewegung eines Dichtkolbens 11 der Betätigungseinrichtung 23 und/oder eines Kolbens des Ventilkörpers 1 gezeigt. Insbesondere ist erkennbar, dass das dort gezeigte Übersetzungsgetriebe 4 in der Seitenansicht der Fig. 5 ein erstes Zylinderelement 41 aufweist sowie ein unmittelbar mit dem ersten Zylinderelement 41 verbundenes Zylinderelement 42 umfasst. Dabei sind das Zylinderelement 41 und das Zylinderelement 42 mechanisch fest, beispielsweise einstückig, miteinander ausgebildet. Insbesondere weist das Zylinderelement 41 einen geringeren Durchmesser als das Zylinderelement 42 auf. Dabei ist das Piezoelement und/oder ein Bewegungsmittel des Piezoelements beispielsweise unmittelbar mit einer Zylindermantelaußenfläche des ersten Zylinderelements 41 verbunden und der Dichtkolben 11 und/oder ein Bewegungselement des Dichtkolbens 11 mit einer Außenfläche des zweiten Zylinderelements 42 verbunden, sodass sich durch eine derartige Umfangsübersetzung bereits eine kleine Bewegung oder Dickenänderung des Piezoelements 21 auf eine entsprechend der Durchmesserverhältnisse der Zylinderelemente 41 und 42 auf eine entsprechend größere Längsbewegung des Dichtkolbens 11 übersetzen lässt. Insbesondere ist es damit ermöglicht, dass der Dichtkolben 11 sich in Längsrichtung des gesamten Antriebs bewegt.

Die Erfindung ist nicht durch die Beschreibung der Ausführungsbeispiele beschränkt. Vielmehr umfasst die Erfindung jedes neue Merkmal sowie jede Kombination von Merkmalen, was insbesondere jede Kombination von Merkmalen der Patentansprüche beinhaltet, auch wenn dieses Merkmal oder diese Kombination selbst nicht explizit in den Patentansprüchen oder in den Ausführungsbeispielen angegeben ist.

### Bezugszeichenliste

- 1: Ventilkörper
- 1A: Blasmedium
- 1B: Hauptströmungsweg
- 3: Energiespeichereinrichtung
- 4: Übersetzungsgetriebe
- 10: Dichtfläche
- 11: Dichtkolben
- 11A: Dichtkolben
- 11B: weitere Dichtkolben
- 12: Gehäuse
- 21: Piezoaktoren
- 22: Steuerungseinrichtung
- 23: Betätigungseinrichtung
- 23A: Steuerluftanschluss
- 23B: Steuerluftkanal
- 41: erstes Zylinderelement
- 42: zweites Zylinderelement
- 100: Ventileinrichtung
- 200: Controllerstation
- 1000: Blasformmaschine

## Patentansprüche

1. Ventileinrichtung (100) zum gesteuerten Einleiten eines Blasmediums (1A) einer Blasformmaschine in Kunststoffformlinge, umfassend zumindest einen steuerbaren Ventilkörper (1), zumindest eine Betätigungseinrichtung (2), sowie eine Steuerungseinrichtung (22) zum Ansteuern der Betätigungseinrichtung (23), wobei die Betätigungseinrichtung (23) zumindest mittelbar in Wirkverbindung mit dem Ventilkörper (1) steht,
**dadurch gekennzeichnet, dass**
die Betätigungseinrichtung (23) zumindest einen Piezoaktor (21) umfasst, wobei über ein Betätigen der Betätigungseinrichtung (23) und einem damit einhergehenden Ansteuern des Piezoaktors (21) durch die Steuerungseinrichtung (22) in Abhängigkeit des in den Piezoaktor (21) eingeprägten Stroms und/oder der an diesen angelegten Spannung der Ventilkörper (1) von einer Offen-Stellung in eine Zu-Stellung und umgekehrt bewegbar ist, und in der Zu-Stellung ein Hauptströmungsweg (1B), zur Einleitung des Blasmediums (1A) in die Kunststoffvorformlinge, verschlossen ist wobei zumindest eine Dichtfläche (10) zwischen einem Dichtkolben (11) des Ventilkörpers (1) und einem Gehäuse (12) des Ventilkörpers (1) einen unterschiedlichen Härtegrad zu einem Härtegrad des Dichtkolbens (11) aufweist.

2. Ventileinrichtung (100) nach Anspruch 1,
**dadurch gekennzeichnet, dass**
die Betätigungseinrichtung (23) zumindest einen Steuerluftanschluss (23A), durch den hindurch Steuerluft, zum mechanischen Bewegen des Ventilkörpers (1) und/oder eines Dichtkolbens (11) der Betätigungseinrichtung (23), entlang eines Steuerluftkanals (23B) führbar ist, umfasst, wobei in der Zu-Stellung ein Strömungsweg durch den Dichtkolben (11) verschlossen oder geöffnet ist.

3. Ventileinrichtung (100) nach Anspruch 1 oder 2,
**dadurch gekennzeichnet, dass**
der Ventilkörper (1) direkt in Eingriff mit der Betätigungseinrichtung, insbesondere mit dem Piezoaktor (21), steht.

4. Ventileinrichtung (100) nach zumindest einem der vorhergehenden Ansprüche,
**dadurch gekennzeichnet, dass**
eine Hubbewegung eines Dichtkolbens (11) der Betätigungseinrichtung (23) und/oder eine Verformung des Piezoaktors (21) zumindest teilweise reversibel ist.

5. Ventileinrichtung (100) nach zumindest einem der vorhergehenden Ansprüche,
**dadurch gekennzeichnet, dass**
über eine Veränderung einer äußeren Form des Piezoaktors (21) und/oder über eine Veränderung einer Dickenausdehnung in Hubrichtung des Ventilkörpers eine Verschiebung eines Dichtkolbens der Betätigungseinrichtung (23) bewirkbar ist.

6. Ventileinrichtung (100) nach zumindest einem der vorhergehenden Ansprüche,
**dadurch gekennzeichnet, dass**
der Piezoaktor (21) in Form eines Piezo-Stacks, umfassend zumindest zwei in Reihe hintereinander positionierte und/oder in Reihe zueinander geschaltete Piezo-Teilaktoren, ausgeführt ist.

7. Ventileinrichtung (100) nach zumindest einem der vorhergehenden Ansprüche,
**gekennzeichnet durch**
zumindest eine Energiespeichereinrichtung (3) zum Speichern von elektrischer Energie, wobei eine Speicherkapazität der Energiespeichereinrichtung (3) derart bemessen ist, dass über eine Ansteuerung und ein Betreiben des Piezoaktors (21) der Ventilkörper (1) und/oder eines Dichtkolbens der Betätigungseinrichtung (23) über zumindest eine vollständige Hubbewegung bewegbar ist.

8. Ventileinrichtung (100) nach zumindest einem der vorhergehenden Ansprüche,
**gekennzeichnet durch**
zumindest ein Übersetzungsgetriebe (4) zum Übertragen und Übersetzen einer Bewegung und/oder Verformung des Piezoaktors (21) auf eine Hubbewegung eines Dichtkolbens (11) der Betätigungseinrichtung (23) und/oder eines Kolbens des Ventilkörpers (1).

9. Ventileinrichtung (100) nach zumindest einem der vorhergehenden Ansprüche,
**dadurch gekennzeichnet, dass**
die Steuerungseinrichtung (22) von einem elektrischen Bussystem mit einer externen Spannung verbunden und betrieben wird.

10. Ventileinrichtung (100) nach zumindest einem der vorhergehenden Ansprüche 2 bis 10,
**dadurch gekennzeichnet, dass**
ein Volumenstrom innerhalb des Hauptströmungswegs (1B) mittels einer durch die Steuerungseinrichtung (22) einstellbaren, variablen Hublänge des Dichtkolbens (11) der Betätigungseinrichtung (23) einstellbar ist.

11. Blasvorrichtung (1000) zum gesteuerten Einleiten eines Blasmediums in Kunststoffformlinge, umfassend zumindest eine Ventileinrichtung (100) gemäß zumindest einem der vorhergehenden Ansprüche,
**dadurch gekennzeichnet, dass**
über zumindest eine Controllerstation (200) die Steuerungseinrichtung (22) überwacht und/oder gesteuert wird.

12. Blasvorrichtung (1000) nach Anspruch 11,
**dadurch gekennzeichnet, dass**
eine Positionierung zumindest einer Reckstange in den Kunststoffvorformling und die Ansteuerung des Piezoaktors (21) über die Steuerungseinrichtung (22) durch die Controllerstation (200) überwacht und/oder gesteuert und aufeinander abgestimmt ist.

13. Blasvorrichtung (1000) nach zumindest einem der Ansprüche 11 bis 12,
**dadurch gekennzeichnet, dass**
ein Hubweg des Ventilkörpers (1) und/oder eines Dichtkolbens (11) der Betätigungseinrichtung (23) parallel oder in einem Winkel von mehr als 0° und weniger als 180° zu einem Hubweg einer Reckstange (300) zum Einführen in den Kunststoffvorformling ist.

14. Verfahren zum Betrieb einer Blasvorrichtung (1000),
**gekennzeichnet, durch**
zumindest eine Ventileinrichtung (100) zum gesteuerten Einleiten eines Blasmediums in Kunststoffformlinge, wobei
die Betätigungseinrichtung (2) zumindest einen Piezoaktor (21) umfasst, und wobei über ein Betätigen der Betätigungseinrichtung (23) und einem damit einhergehenden Ansteuern des Piezoaktors (21) durch die Steuerungseinrichtung (22) in Abhängigkeit des in den Piezoaktor (21) eingeprägten Stroms und/oder der an diesen angelegten Spannung der Ventilkörper (1) von einer Offen-Stellung in eine Zu-Stellung und umgekehrt bewegt wird, und in der Zu-Stellung ein Hauptströmungsweg (1B), zur Einleitung des Blasmediums (1A) in die Kunststoffvorformlinge, verschlossen ist, wobei zumindest eine Dichtfläche (10) zwischen einem Dichtkolben (11) des Ventilkörpers (1) und einem Gehäuse (12) des Ventilkörpers (1) einen unterschiedlichen Härtegrad zu einem Härtegrad des Dichtkolbens (11) aufweist.

## Claims

1. Valve device (100) for controlled introduction of a blowing medium (1A) of a blow moulding machine into plastic parisons, comprising at least one controllable valve body (1), at least one actuating device (23), and also a control device (22) for controlling the actuating device (23), wherein the actuating device (23) is at least indirectly operatively connected to the valve body (1),
**characterised in that**
the actuating device (23) comprises at least one piezoelectric actuator (21), wherein by means of actuation of the actuating device (23) and a control of the piezoelectric actuator (21), which is associated therewith, by the control device (22) in dependence on the current impressed into the piezoelectric actuator (21) and/or the voltage applied thereto the valve body (1) can be moved from an open position into a closed position and vice versa, and in the closed position a main flow path (1B), for introduction of the blowing medium (1A) into the plastic parisons, is closed, wherein at least one sealing surface (10) between a sealing piston (11) of the valve body (1) and a housing (12) of the valve body (1) has a different degree of hardness from the degree of hardness of the sealing piston (11).

2. Valve device (100) according to claim 1,
**characterised in that**
the actuating device (23) comprises at least one control air connection (23A), through which control air, for mechanical movement of the valve body (1) and/or a sealing piston (11) of the actuating device (23), can be guided along a control air channel (23B), wherein in the closed position a flow path is closed or opened by the sealing piston (11).

3. Valve device (100) according to claim 1 or 2,
**characterised in that**
the valve body (1) engages directly with the actuating device, in particular with the piezoelectric actuator (21).

4. Valve device (100) according to at least one of the preceding claims,
**characterised in that**
a lifting movement of a sealing piston (11) of the actuating device (23) and/or a deformation of the piezoelectric actuator (21) is at least partially reversible.

5. Valve device (100) according to at least one of the preceding claims,
**characterised in that**
a displacement of a sealing piston of the actuating device (23) can be effected by means of a change in an external shape of the piezoelectric actuator (21) and/or by means of a change in an expansion of the thickness in the lifting direction of the valve body.

6. Valve device (100) according to at least one of the preceding claims,
**characterised in that**
the piezoelectric actuator (21) is configured in the form of a piezo stack, comprising at least two piezoelectric part-actuators positioned one behind the other in series and/or connected to one another in series.

7. Valve device (100) according to at least one of the preceding claims,
**characterised by**
at least one energy storage device (3) for storing electrical energy, wherein the storage capacity of the energy storage device (3) is dimensioned in such a way that by means of control and operation of the piezoelectric actuator (21) the valve body (1) and/or a sealing piston of the actuating device (23) can be moved via at least one complete lifting movement.

8. Valve device (100) according to at least one of the preceding claims,
**characterised by**
at least one transmission gear (4) for transmitting and transforming a movement and/or a deformation of the piezoelectric actuator (21) to a lifting movement of a sealing piston (11) of the actuating device (23) and/or of a piston of the valve body (1).

9. Valve device (100) according to at least one of the preceding claims,
**characterised in that**
the control device (22) is connected to an external voltage and operated by an electrical bus system.

10. Valve device (100) according to at least one of the preceding claims 2 to 10,
**characterised in that**
a volumetric flow within the main flow path (1B) is adjustable by means of a variable stroke length of the sealing piston (11) of the actuating device (23) which can be adjusted by the control device (22).

11. Blow moulding device (1000) for controlled introduction of a blowing medium into plastic parisons, comprising at least one valve device (100) according to at least one of the preceding claims,
**characterised in that**
the control device (22) is monitored and/or controlled by means of at least one controller station (200).

12. Blow moulding device (1000) according to claim 11,
**characterised in that**
the positioning of at least one stretching rod in the plastic parison and the control of the piezoelectric actuator (21) by means of the control device (22) are monitored and/or controlled and co-ordinated with one another by the controller station (200).

13. Blow moulding device (1000) according to at least one of claims 11 to 12,
**characterised in that**
a stroke path of the valve body (1) and/or of a sealing piston (11) of the actuating device (23) is parallel to or at an angle of more than 0° and less than 180° to a stroke path of a stretching rod (300) for introduction into the plastic parison.

14. Method for operating a blow moulding device (1000),
**characterised by**
at least one valve device (100) for controlled introduction of a blowing medium into plastic parisons, wherein
the actuating device (2) comprises at least one piezoelectric actuator (21), wherein by means of actuation of the actuating device (23) and a control of the piezoelectric actuator (21), which is associated therewith, by the control device (22) in dependence on the current impressed into the piezoelectric actuator (21) and/or the voltage applied thereto the valve body (1) can be moved from an open position into a closed position and vice versa, and in the closed position a main flow path (1B), for introduction of the blowing medium (1A) into the plastic parisons, is closed, wherein at least one sealing surface (10) between a sealing piston (11) of the valve body (1) and a housing (12) of the valve body (1) has a different degree of hardness from the degree of hardness of the sealing piston (11).

## Revendications

1. Dispositif de soupape (100) pour l'introduction contrôlée d'un milier de soufflage (1A) d'une machine de moulage par soufflage dans des préformes en plastique, comprenant au moins un corps de vanne (1) pouvant être commandé, au moins un dispositif d'actionnement (2) ainsi qu'un dispositif de commande (22) pour commander le dispositif d'actionnement (23), dans lequel le dispositif d'actionnement (23) est au moins indirectement en connexion fonctionnelle avec le corps de vanne (1),
**caractérisé en ce que**
le dispositif d'actionnement (23) comprend au moins un actionneur piézoélectrique (21), dans lequel via l'actionnement du dispositif d'actionnement (23) et une commande associée de l'actionneur piézoélectrique (21) par le dispositif de commande (22) en fonction du courant contraint dans l'actionneur piézoélectrique et/ou la tension qui lui est appliquée, le corps de vanne (1) est déplacé d'une position ouverte à une position fermée et vice versa et en position fermée, un chemin d'écoulement principal (1B) pour introduire le milieu de soufflage (1A) dans les préformes en plastique est fermé, dans lequel au moins une surface d'étanchéité (10) entre un piston d'étanchéité (11) du corps de vanne (1) et un boîtier (12) du corps de vanne (1) présente un degré de dureté différent d'un degré de dureté du piston d'étanchéité (11).

2. Dispositif de soupape (100) selon la revendication 1,
**caractérisé en ce que**
le dispositif d'actionnement (23) comprend au moins un raccord d'air de commande (23A) à travers lequel l'air de commande peut être guidé le long d'un conduit d'air de commande (23B) pour déplacer mécaniquement le corps de vanne (1) et/ou un piston d'étanchéité (11) du dispositif d'actionnement (23), un trajet d'écoulement à travers le piston d'étanchéité (11) étant fermé ou ouvert en position fermée.

3. Dispositif de soupape (100) selon la revendication 1 ou 2,
**caractérisé en ce que**
le corps de vanne (1) est en prise directe avec le dispositif d'actionnement, en particulier avec l'actionneur piézoélectrique (21).

4. Dispositif de soupape (100) selon au moins l'une des revendications précédentes,
**caractérisé en ce que**
un mouvement de levage d'un piston d'étanchéité (11) du dispositif d'actionnement (23) et/ou une déformation de l'actionneur piézoélectrique (21) est au moins partiellement réversible.

5. Dispositif de soupape (100) selon au moins l'une des revendications précédentes,
**caractérisé en ce que**
un déplacement d'un piston d'étanchéité du dispositif d'actionnement (23) peut être provoqué en modifiant une forme externe de l'actionneur piézoélectrique (21) et/ou en modifiant une expansion d'épaisseur dans le sens du levage du corps de vanne.

6. Dispositif de soupape (100) selon au moins l'une des revendications précédentes,
**caractérisé en ce que**
l'actionneur piézoélectrique (21) est réalisé sous la forme d'un empilement piézoélectrique, comprenant au moins deux actionneurs piézoélectriques positionnés en série l'un derrière l'autre et/ou connectés en série l'un avec l'autre.

7. Dispositif de soupape (100) selon au moins l'une des revendications précédentes,
**caractérisé par**
au moins un dispositif de stockage d'énergie (3) pour stocker l'énergie électrique, dans lequel une capacité de stockage du dispositif de stockage d'énergie (3) est dimensionnée de telle sorte que le corps de soupape (1) et/ou un piston d'étanchéité du dispositif d'actionnement (23) peuvent être déplacés sur au moins un mouvement de levage complet en commandant et en actionnant l'actionneur piézoélectrique (21).

8. Dispositif de soupape (100) selon au moins l'une des revendications précédentes,
**caractérisé par**
au moins un engrenage de transmission (4) pour transmettre et traduire un mouvement et/ou une déformation de l'actionneur piézoélectrique (21) en un mouvement de levage d'un piston d'étanchéité (11) du dispositif d'actionnement (23) et/ou d'un piston du corps de vanne (1).

9. Dispositif de soupape (100) selon au moins l'une des revendications précédentes,
**caractérisé en ce que**
le dispositif de commande (22) est connecté à une tension externe et actionné par un système électrique de bus.

10. Dispositif de soupape (100) selon au moins l'une des revendications précédentes 2 à 10,
**caractérisé en ce que**
un débit volumique dans le trajet d'écoulement principal (1B) peut être réglé au moyen d'une longueur de levage variable du piston d'étanchéité (11) du dispositif d'actionnement (23) qui peut être réglée par le dispositif de commande (22).

11. Dispositif de soufflage (1000) pour l'introduction contrôlée d'un milieu de soufflage dans des préformes en plastique, comprenant au moins un dispositif de soupape (100) selon au moins l'une des revendications précédentes,
**caractérisé en ce que**
le dispositif de commande (22) est surveillé et/ou commandé via au moins une station de commande (200).

12. Dispositif de soufflage (1000) selon la revendication 11,
**caractérisé en ce que**
un positionnement d'au moins une tige d'étirage dans la préforme en plastique et la commande de l'actionneur piézoélectrique (21) via le dispositif de commande (22) par le poste de commande (200) sont surveillés et/ou commandés et coordonnés entre eux.

13. Dispositif de soufflage (1000) selon au moins l'une des revendications 11 à 12,
**caractérisé en ce que**
un levage du corps de vanne (1) et/ou d'un piston d'étanchéité (11) du dispositif d'actionnement (23) est parallèle ou à un angle de plus de 0 ° et de moins de 180 ° par rapport à un levage d'une tige d'étirage (300) pour l'insertion dans la préforme en plastique.

14. Procédé de fonctionnement d'un dispositif de soufflage (1000),
**caractérisé par**
au moins un dispositif de vanne (100) pour l'introduction contrôlée d'un milieu de soufflage dans des pièces moulées en matière plastique, dans lequel
le dispositif d'actionnement (23) comprend au moins un actionneur piézoélectrique (21), dans lequel via l'actionnement du dispositif d'actionnement (23) et une commande associée de l'actionneur piézoélectrique (21) par le dispositif de commande (22) en fonction du courant contraint dans l'actionneur piézoélectrique et/ou la tension qui lui est appliquée, le corps de vanne (1) est déplacé d'une position ouverte à une position fermée et vice versa et en position fermée, un chemin d'écoulement principal (1B) pour introduire le milieu de soufflage (1A) dans les préformes en plastique est fermé, dans lequel au moins une surface d'étanchéité (10) entre un piston d'étanchéité (11) du corps de vanne (1) et un boîtier (12) du corps de vanne (1) présente un degré de dureté différent d'un degré de dureté du joint piston (11).
